# EUROPEAN PATENT SPECIFICATION

(11) **EP 2 578 289 B1**
(45) Date of publication and mention of the grant of the patent: **03.05.2017**
(21) Application number: 12187370.7
(22) Date of filing: 05.10.2012
(51) Int. Cl.: B01D 35/02, F01M 1/10, F01M 11/03

(54) **Oil filter**
Ölfilter
Filtre à huile

(30) Priority: 05.10.2011 JP 2011220737
(43) Date of publication of application: 10.04.2013
(73) Proprietor: Honda Motor Co., Ltd., Tokyo 107-8556 (JP)
(72) Inventor: Ishihara, Sunao, Saitama, 351-0193 (JP); Shudo, Norimasa, Saitama, 351-0193 (JP)
(74) Representative: Beder, Jens

(56) References cited:
- EP-A2- 2 284 367
- JP-A- H11 267 413
- JP-B2- 3 165 819

## Description

The present invention relates to an oil filter provided in an oil passage such as a hydraulic pressure control circuit of a transmission, for filtering the oil by capturing foreign matters such as metal flake particles and dusts included in oil passing through the oil passage.

A hydraulic control device (oil pressure control device) included in an automatic transmission mounted in a vehicle has an oil pressure control body having an oil passage formed therein for circulating oil. This oil pressure control body includes a plurality of control bodies each having a ditch portion forming an oil passage, and is formed by jointing the oil passage defining surfaces of the plurality of control bodies via a metallic separate plate in between.

The oil circulating through the oil passage within the oil pressure control body includes foreign matters (impurities) such as dusts and metal flake particles produced by metal parts such as a transmission gear and clutch. Therefore, in the oil passage, an oil filter is provided for capturing the foreign matters as shown in, for example, JP 3165819 B (Patent Document 1). This type of an oil filter is formed by a cylindrical basket-shaped frame and a cylindrical metallic net attached to the frame, and formed in a cylindrical container shape having an inflow opening at one end in the axis direction. A flange portion formed at one end of the frame is arranged facing the periphery of an oil outflow opening provided in the separate plate. In this oil filter, foreign matters mixed in the oil flowing into the oil filter from the oil inflow opening of the separate plate are caught by the metallic net, and the oil is filtered in this manner.

Incidentally, in the oil filter of the above configuration, when there is a gap between the top end of the frame and the periphery of the oil inflow opening of the separate plate, a part of the oil flowing from the oil inflow opening into the oil filter leaks from the gap into the oil passage. Then, foreign matters included in the oil circulate through the oil passage without being captured. This will cause a malfunction in each part of an automatic transmission.

In addition, in the case of a configuration where the aforementioned gap is sealed, namely, the configuration where the top end of the frame and the periphery of the oil inflow opening of the separate plate are joined inseparably, when clogging occurs in the oil filter, the oil is blocked by the oil filter. This makes it difficult to control the oil pressure of the oil passage to be an appropriate pressure, and possibly causes a malfunction in the automatic transmission.

In this case, it is also conceivable to set the space of the metallic net (the intervals of the meshes) to be large enough not to cause clogging in the oil filter. However, in turn, foreign matters having dimensions that cannot be captured by the oil filter increase, which also causes a malfunction in the automatic transmission.

In this regard, the oil filter of Patent Document 1 has a separate elastic body for fixing the oil filter to a member of an attached side such as a separate plate, and adopts a configuration that the oil filter is closely attached to the member of the attached side by not only a magnetic attraction force, but also the urging force of the elastic body. In addition, other than that, it is also conceivable to provide a relief valve in the oil passage connected to the oil filter. However, if these structures are adopted, the number of parts increases, which will cause structural complications in the oil filter and the control body having the oil filter, and then cause the cost increase and weight increase of a transmission and a vehicle.

An oil filter unit that is mounted in the inner surface of an oil pan by magnet holders arranged in the region of the inflow opening of the oil filter unit, is known from EP 2 284367 A2.

An oil filter, in which all features of the preamble of claim 1 are disclosed, is described in JP H11 267413 A.

It is an object of the invention to provide an oil filter having a simple structure capable of filtering the oil by effectively capturing foreign matters such as metal flake particles included in oil circulating through an oil passage, and also capable of preventing an abnormal increase of the oil pressure of the oil passage when clogging has occurred.

This object is achieved by an oil filter according to the enclosed independent claim 1. Advantageous features of the present invention are defined in the corresponding subclaims.

According to the oil filter of the present invention, as the oil filter includes a frame and a mesh member attached to the frame, for capturing foreign matters included in oil passing through the mesh member, and the frame is an integrally molded product made of a ferrite injection molded magnet, magnetic particles such as metal flake particles are attracted to the frame, which results in increasing the performance of removing foreign matters included in the oil. In addition, as the frame of the oil filter according to the present invention may be configured in a shape and size similar to a conventional oil filter made of a non-magnetic material such as a synthetic resin, the oil filter can be employed as a substitute for a conventional oil filter. Furthermore, the oil filter according to the present invention is mounted by magnetically jointing the flange portion to the magnetic member defining the oil passage, and thereby the work of mounting the oil filter in the oil passage is made easier.

In addition, in the oil filter according to the present invention, as the flange portion is magnetically joined to the magnetic member, a leakage of oil from the gap between the inflow opening of the oil filter and the magnetic member can be prevented. In this manner, it is possible to securely prevent foreign matters included in the oil from circulating through the oil passage without being captured. In addition, in the oil filter according to the present invention, as the frame made of a ferrite injection molded magnet is magnetically attached to the magnetic member, a magnetic flux is produced in not only the frame of the oil filter, but also the magnetic member forming the oil passage. In this manner, the performance of capturing magnetic particles such as metal particles included in the oil is further improved.

In addition, the above oil filer is configured in a manner that, when a pressure inside the capturing portion (25) exceeds a predetermined point, the flange portion (11) is disengaged from the magnetic member by the pressure. This configuration, at the normal state, secures the sealed condition between the aperture of the separate plate and the inflow opening of the frame, and thus prevents foreign maters such as metal particles included in oil from flowing out to the oil passage within the oil pressure control body, while in the case of clogging of the mesh member, as the pressure in the capturing portion exceeds a predetermined point, the flange portion is disengaged from the magnetic member, which makes a gap between the aperture of the magnetic member and the inflow opening of the frame, which then allows oil inside the capturing portion to flow out to the oil passage to be discharged. That is, as a fail-safe in the case of clogging the oil filter, the oil filter is disengaged from the separate plate to make a gap therebetween. Accordingly, even if the oil filter is clogged, an abnormal increase of the oil pressure of the oil passage can be prevented.

In addition, the above oil filter be preferably configured in a manner that the frame (10) includes: the flange portion (11); a bottom portion (13) arranged opposite to and spaced apart from the flange portion (11); and a connection portion (15) connecting the flange portion (11) and the bottom portion (13), and that the connection portion (15) consists of a single support member extending from the flange portion (11) to the bottom portion (13).

According to this configuration, as the connection portion connecting the flange portion and the bottom portion is formed by only a single support member, it is possible to secure a maximum surface area of the mesh member available for filtering the oil, and to reduce the pressure loss of the oil passing through the oil filter. Furthermore, according to this configuration, as compared with a case that a plurality of support members is provided, it is possible to secure a wide attraction area on the surface of the single support member for magnetic particles. In addition, as the fluidity (injection fluidity) of the frame made of a ferrite injection molded magnet improves, it is also possible to improve the formability of the frame. Furthermore, it is possible to secure a strength required for the connection portion of the frame. Thereby it is possible to configure the oil filter that can simultaneously achieve: a simple structure; an improvement of performance of filtering foreign matters; a reduction of pressure loss of oil; an improvement of formability of the frame; and the securement of the strength of the oil filter required for the frame.

In addition, the above oil passage (37) is preferably an oil passage (37) formed within the oil pressure control body (30) included in a transmission. The magnetic member (35) is preferably a separate plate (35) placed between joint surfaces of the oil pressure control body (30). The flange portion (11) is preferably magnetically joined around the aperture (36) of the oil passage (37) provided in the separate plate (35) so that sealing is made between the aperture (36) and the inflow opening (12). Accordingly, a leakage of oil from between the aperture of the separate plate and the inflow opening of the frame can be securely prevented with a simple structure, which results in eliminating a possibility of flowing foreign matters such as metal particles included in the oil into the oil passage within the oil pressure control body. Therefore, it can prevent an occurrence of faults derived from magnetic particles mixed in the oil (for example, malfunctions of valves, seizure, and wear of each operation part of an automatic transmission).

The reference numerals noted in the above parentheses exemplify the numerals of the corresponding constitutional elements of a later described embodiment for reference.
FIG. 1A is a plan view of an oil filter of one embodiment of the present invention.
FIG. 1B is a cross sectional view taken along the arrowed line X-X of FIG. 1A.
FIG. 1C is a bottom view of the oil filter shown in FIG. 1A.
FIG. 1D is a cross sectional view taken along the arrowed line Y-Y of FIG. 1B.
FIG. 2 illustrates the oil filter mounted in an oil passage of an oil pressure control body.
FIG. 3 is an exploded perspective view of the oil pressure control body and the oil filter.
FIG. 4A illustrates the oil filter mounted in the oil passage of the oil pressure control body in a normal state where no clogging has occurred in the oil filter.
FIG. 4B illustrates the oil filter mounted in the oil passage of the oil pressure control body in a state where clogging has occurred in the oil filter.

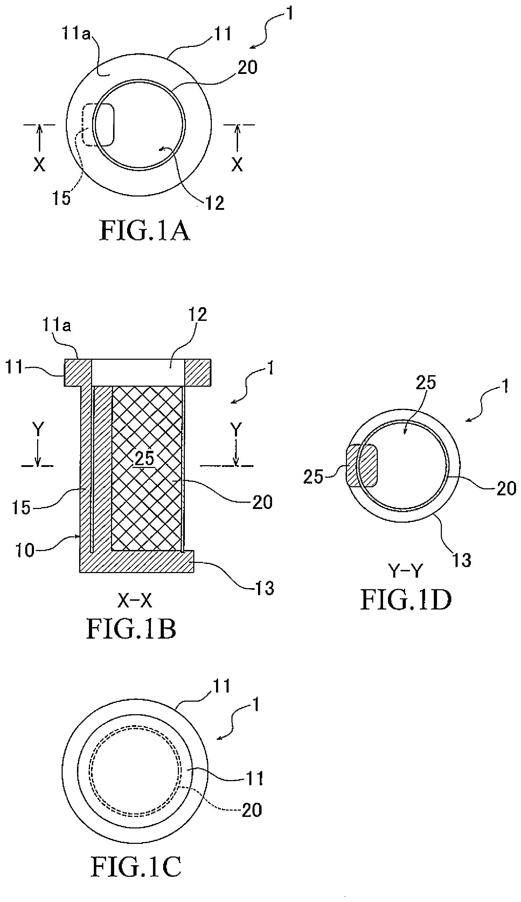

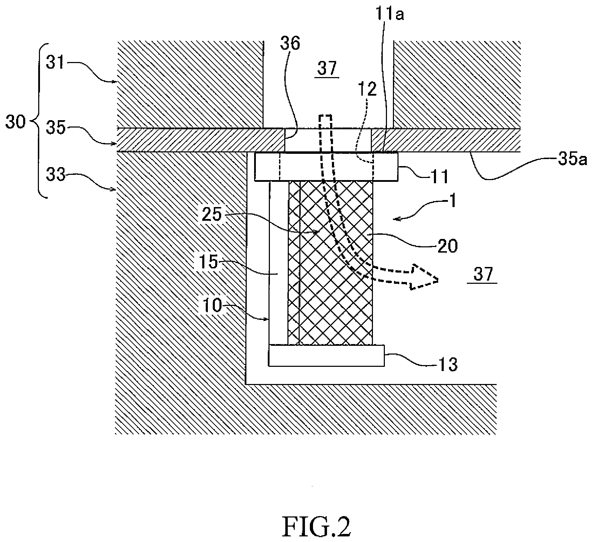

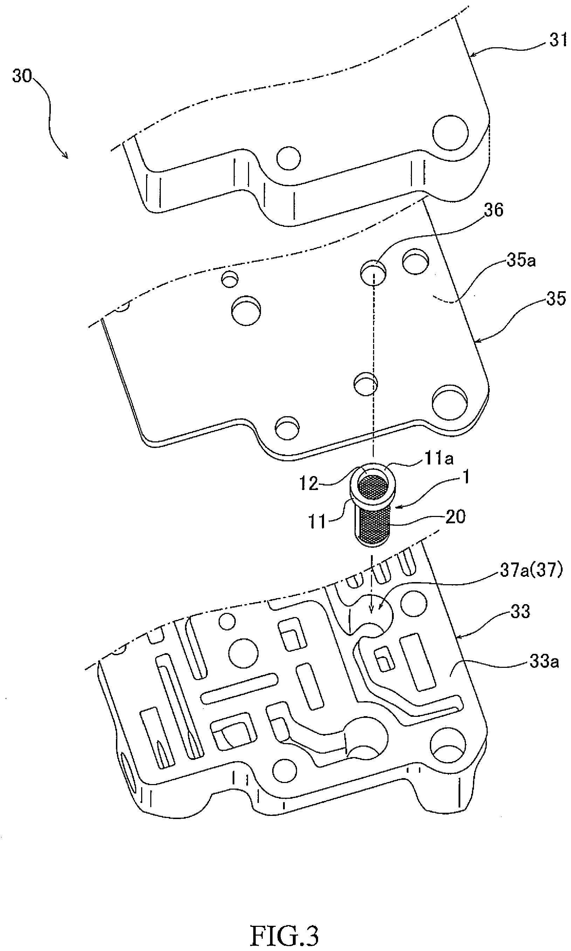

Hereinafter, embodiments of the present invention will be described in more detail with reference to the accompanying drawings. FIG. 1A is a plan view of an oil filter 1 of one embodiment of the present invention. FIG. 1B is a cross sectional view taken along the arrowed line X-X of FIG. 1A. FIG. 1C is a bottom view of the oil filter 1. FIG. 1D is a cross sectional view taken along the arrowed line Y-Y of FIG. 1B. FIG. 2 is a sectional side view of an oil pressure control body 30, illustrating the oil filter 1 mounted in an oil passage 37 of the oil pressure control body 30. FIG. 3 is an exploded perspective view of the oil pressure control body 30 and the oil filter 1.

The oil filter 1 of this embodiment is mounted in the oil passage 37 within the oil pressure control body 30. This oil filter 1 is formed by a frame 10 and a mesh member 20 attached to the frame 10, in a cylindrical shape having a bottom such that foreign matters included in the oil flowing from an inflow opening 12 of the top of the filter are captured by the mesh member 20 and accumulated in a substantially cylindrical capturing portion 25 as shown in FIG. 1.

The frame 10 is an integrally molded product made of a ferrite injection molded magnet, and has: an annular flange portion 11 provided at one end (top end) in the axis direction (vertical direction) ; a disc-shaped bottom portion 13 placed opposite to and spaced apart from the flange portion 11 in the axis direction (vertical direction); and a connection portion 15 connecting the flange portion 11 and the bottom portion 13. The internal diameter of the flange portion 11 defines an inflow opening 12 that flows the oil into the capturing portion 25. The top end surface of the flange portion 11 forms an attraction surface 11a that magnetically joins to an undersurface 35a of the separate plate 35. The connection portion 15 is formed by only a single support member having a straight rod shape extending in the axis direction (vertical direction). The mesh member 20 is formed in a cylindrical shape having a diameter to fit in the inner circumference of the frame 10, and its surface is formed by thin lines in a grid pattern. The size of the grid is determined in accordance with the dimension of foreign matters to be captured.

The oil pressure control body 30, in which the oil filter 1 is provided, is mounted in a hydraulic control device (not shown) of an automatic transmission included in a vehicle. This oil pressure control body 30 is formed by combining an upper body 31 and a lower body 33 and the separate plate 35 as shown in FIG. 2. The upper body 31 and the lower body 33 are each formed from a metal in a substantially rectangular shape having a certain thickness. As shown in FIG. 3, the top surface 33a of the lower body 33 is provided with an oil passage ditch 37a therein forming an oil passage 37. The undersurface of the upper body 31 is also provided with an oil passage ditch therein forming the oil passage 37 (not shown).

The oil pressure control body 30 is configured by jointing the upper body 31 and the lower body 33 with the undersurface of the upper body 31 and the upper surface 33a of the lower body 33 faced each other via a separate plate 35 in between, which is formed by a metallic thin plate member, and fixing the upper body 31 and the lower body 33 with a plurality of bolts (not shown) at multiple places along the rim thereof. The separate plate 35 has an aperture 36 of the oil passage formed at an appropriate location.

As shown in FIG. 3, the oil filter 1 is accommodated in the oil passage ditch 37a of the lower body 33 in a state that the flange portion 11 of the frame 10 is magnetically joined to the undersurface 35a of the separate plate 35 (specifically, to the undersurface 35a around the aperture 36). As shown in FIG. 2, as the attraction surface 11a of the flange portion 11 is joined to the undersurface 35a of the separate plate 35, a gap between the periphery of the aperture 36 of the separate plate 35 and the periphery of the inflow opening 12 of the oil filter 1 is sealed.

In the oil filter 1 of the above configuration, the oil circulating through the oil passage 37 of the oil pressure control body 30 flows into the capturing portion 25 from the inflow opening 12. At this time, magnetic particles such as metal particles mixed in the oil are magnetically attracted to the frame 10. Other foreign matters mixed in the oil than magnetic particles are captured by the mesh member 20 and accumulated in the capturing portion 25.

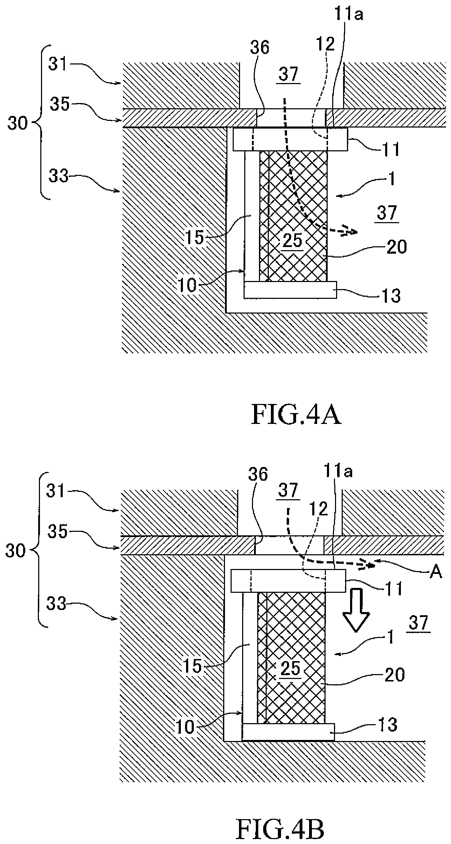

FIG. 4A illustrates the oil filter 1 mounted in the oil passage 37 of the oil pressure control body 30 in a normal state where no clogging has occurred in the filter. FIG. 4B illustrates the oil filter 1 in a state where clogging has occurred in the oil filter. In the normal state where no clogging has occurred in the mesh member 20 of the oil filter 1, the oil filter 1 is mounted in a state that it is magnetically joined to the undersurface 35a of the separate plate 35 as shown in FIG 4A. In this state, the oil flowing from the aperture 36 of the separate plate 35 into the lower body 33 flows from the inflow opening 12 of the oil filter 1 into the capturing portion 25, and is filtered by the mesh member 20 and flows out to the oil passage 37. On the other hand, once clogging has occurred in the mesh member 20 of the oil filter 1, it becomes difficult for the oil flowing into the capturing portion 25 to pass the mesh member 20, which results in increasing the oil pressure in the capturing portion 25. Once the pressure in the capturing portion 25 exceeds a predetermined point, the flange portion 11 is disengaged from the separate plate 35 by the pressure, and the oil filter 1 falls down as shown in FIG. 4B. In this manner, a gap A is made between the aperture 36 of the separate plate 35 and the inflow opening 12 of the oil filter 1. Then, the oil discharged from the aperture 35 of the separate plate 35 flows out to the oil passage 37 through the gap A as shown by an arrow of FIG. 4B. Accordingly, even if clogging has occurred in the mesh member 20 of the oil filter 1, an abnormal increase of the pressure in the oil passage 37 can be prevented.

According to the oil filter 1 of the embodiment described above, as the frame 10 is an integrally molded product made of a ferrite injection molded magnet, magnetic particles such as metal flake particles are attracted to the frame 10, which results in improving the performance of removing foreign matters included in the oil. In addition, as the frame 10 of this oil filter 1 may be configured in a shape and size similar to a conventional oil filter made of a non-magnetic material such as a synthetic resin, the oil filter 1 can be employed as a substitute for a conventional oil filter. Furthermore, as the oil filter 1 is mounted in the oil passage 37 by magnetically jointing the flange portion 11 to the separate plate 35, the work of mounting the oil filter 1 in the oil passage 37 is made easier.

In addition, as the flange portion 11 is magnetically joined to the separate plate 35 of a magnetic member, a leakage of oil from the gap between the inflow opening 12 of the oil filter 1 and the aperture 36 of the separate plate 35 can be prevented in the normal state. Accordingly, this embodiment can securely prevent foreign matters included in the oil from circulating through the oil passage 37 without being captured at the oil filter 1. In addition, as the frame 10 made of a ferrite injection molded magnet is magnetically attached to the separate plate 35 of a magnetic member, a magnetic flux is produced in not only the frame 10 of the oil filter 1, but also the separate plate 35 forming the oil passage 37. In this manner, the performance of removing foreign matters such as metal particles included in the oil is further improved.

In addition, in the oil filter 1, as the connection portion 15 connecting the flange portion 11 and the bottom portion 13 is formed by only a single support member, it is possible to secure a maximum surface area of the mesh member 20 available for filtering the oil, and to reduce the pressure loss of the oil passing through the oil filter 1. Furthermore, as compared with a case that a plurality of support members is provided, it is possible to secure a wide attraction area on the surface of the single support member for magnetic particles. In addition, as the fluidity (injection fluidity) of the frame 10 made of a ferrite injection molded magnet improves, it is also possible to improve the formability of the frame 10. Furthermore, it is possible to secure a strength required for the connection portion 15 of the frame 10. Thereby it is possible to configure the oil filter 1 that can simultaneously achieve: a simple structure; an improvement of performance of filtering foreign matters; a reduction of pressure loss of oil; an improvement of formability of the frame 10; and the securement of the strength of the oil filter 1 required for the frame 10.

The oil filter 1 of this embodiment has been configured to have a single support member of a connection portion to: secure the strength required for the frame 10; improve the formability; and increase the attraction area for magnetic particles, when the frame of a conventional oil filter made of synesthetic resin was replaced with the frame 10 made of a ferrite injection molded magnet. In addition, by employing the single support member, it is also possible to achieve compatibility between the securement of the cross sectional area of the support member and the reduction of the pressure loss of the flowing oil.

In addition, as the flange portion 11 is magnetically joined to the periphery of the aperture 36 provided in the separate plate 35 for the oil passage 37, sealing is made between the aperture 36 and the inflow opening 12. In this manner, a leakage of oil from between the aperture 36 of the separate plate 35 and the inflow opening 12 of the frame 10 can be securely prevented with a simple structure. Accordingly, it eliminates a possibility of flowing foreign matters such as metal flake particles included in the oil into the oil passage 37. Therefore, it can prevent an occurrence of faults derived from magnetic particles mixed in oil (for example, malfunctions of valves, seizure, and wear of each operation part of an automatic transmission).

In addition, as described above, as the oil filter 1 of this embodiment is mounted in the oil passage 37 with only magnetic jointing in a manner of magnetically jointing the flange portion 11 of the frame 10 to the separate plate 35, once the pressure in the capturing portion 25 exceeds a predetermined point, the flange portion 11 is disengaged from the separate plate 35 by the pressure. This configuration, at the normal state, secures the sealed condition between the aperture 36 of the separate plate 35 and the inflow opening 12 of the frame 10, and thus prevents foreign maters such as metal flake particles included in oil from flowing out to the oil passage 37 within the oil pressure control body 30, while in the case of clogging of the mesh member 20, as the pressure in the capturing portion 25 exceeds a predetermined point, the flange portion 11 is disengaged from the separate plate 35, which makes a gap between the aperture 36 of the separate plate 35 and the inflow opening 12 of the frame 10, which then allows the oil inside the capturing portion 25 to flow out to the oil passage 37 to be discharged.

That is, as a fail-safe in a case of clogging the oil filter 1, the oil filter 1 is disengaged from the separate plate 35 to make a gap therebetween. Accordingly, even if the oil filter 1 is clogged, an abnormal increase of the oil pressure of the oil passage 37 can be prevented.

The embodiment of the present invention has been described above, but the present invention is not limited to the above embodiment, and various modifications are possible within the scope of the claims. For example, the specific shape of the frame and others included in the oil filter shown in the above embodiment and drawings is one example, and the oil filter according to the invention may have other shapes than the one shown in the embodiment.

## Claims

1. An oil filter (1) comprising
a frame (10) and
a mesh member (20) attached to the frame (10), for capturing foreign matters included in oil passing through the mesh member (20), wherein
the frame (10) is an integrally molded product made of a ferrite injection molded magnet, and includes:
an inflow opening (12) for flowing the oil into a capturing portion (25) inside the mesh member (20); and
a flange portion (11) provided around the inflow opening (12),
wherein the flange portion (11) of the frame (10) is magnetically joined to a magnetic member (35) defining an oil passage (37) for circulating the oil, wherein
the flange portion (11) is magnetically joined around the aperture (36) of the oil passage (37) so that sealing is made between the aperture (36) of the oil passage (37) and the inflow opening (12), **characterized in that**
in a state where clogging has occurred in the oil filter (1) and a pressure inside the capturing portion (25) exceeds a predetermined point, the flange portion (11) is configured to form a gap between the aperture (36) of the magnetic member (35) and the inflow opening (12) by disengaging from the magnetic member (35) by the pressure, and **in that**
the oil filter (1) is mounted in the oil passage (37) only by the magnetic jointing.

2. The oil filter (1) according to Claim 1, wherein the frame (10) comprising:
the flange portion (11);
a bottom portion (13) arranged opposite to and spaced apart from the flange portion (11); and
a connection portion (15) connecting the flange portion (11) and the bottom portion (13), and
wherein the connection portion (15) consists of a single support member extending from the flange portion (11) to the bottom portion (13).

3. The oil filter (1) according to Claim 1 or Claim 2, wherein
the oil passage (37) is an oil passage (37) formed within the oil pressure control body (30) included in a transmission, wherein
the magnetic member (35) is a separate plate (35) placed between joint surfaces of the oil pressure control body (30).

## Patentansprüche

1. Ölfilter (1) umfassend:
einen Rahmen (10) und
ein Netzelement (20), das an dem Rahmen (10) befestigt, um fremde Dinge, die in dem Öl, welches durch das Netzelement (20) hindurchtritt, zu fassen, wobei
der Rahmen (10) ein einstückig gegossenes Erzeugnis ist, das aus einem spritzgegossenen, ferritischen Magneten gemacht wird, und aufweisend:
eine Einlauföffnung (12) zum Fließen des Öls in einen Auffangabschnitt (25) innerhalb des Netzelements (20); und
ein Flanschabschnitt (11), der um die Einlauföffnung (12) vorgesehen ist, wobei
der Flanschabschnitt (11) des Rahmens (10) magnetisch mit dem Magnetelement (35) verbunden ist, das einen Öldurchgang (37) zum Zirkulieren des Öls definiert, wobei
der Flanschabschnitt (11) magnetisch um die Öffnung (36) des Öldurchgangs (37) verbunden ist, so dass eine Dichtung zwischen der Öffnung (36) des Öldurchgangs (37) und der Einlauföffnung (12) ausgebildet wird,
**dadurch gekennzeichnet, dass**
in einem Zustand, wo eine Verstopfung in dem Ölfilter (1) aufgetreten ist und ein Druck in dem Auffangabschnitt (25) einen vorgegebenen Punkt übersteigt, der Flanschabschnitt (11) eingerichtet ist, um einen Spalt zwischen der Öffnung (36) des magnetischen Elements (35) und der Einlauföffnung (12) durch Trennen von dem magnetischen Element (35) durch Druck zu bilden, und dadurch, dass
der Ölfilter (1) in dem Öldurchgang (37) nur durch magnetische Verbindung montiert ist.

2. Ölfilter (1) gemäß Anspruch 1, wobei der Rahmen (10) umfasst:
den Flanschabschnitt (11);
einen Bodenabschnitt (13), der gegenüberliegend zu und beabstandet von dem Flanschabschnitt (11) angeordnet ist; und
ein Verbindungsabschnitt (15), der den Flanschabschnitt (11) und den Bodenabschnitt (13) verbindet, und
wobei der Verbindungsabschnitt (15) aus einem einzelnen Stützelement besteht, dass sich von dem Flanschabschnitt (11) zu dem Bodenabschnitt (13) erstreckt.

3. Ölfilter (1) gemäß Anspruch 1 oder 2, wobei
der Öldurchgang (37) ein Öldurchgang (37) ist, der innerhalb des Öldrucksteuergehäuses (30) ausgebildet ist, das in einem Getriebe enthalten ist, wobei
das magnetische Element (35) eine separate Platte (35) ist, die zwischen den Verbindungsflächen des Öldrucksteuergehäuses (30) platziert ist.

## Revendications

1. Filtre à huile (1) comprenant
un cadre (10) et
un organe de maille (20) fixé au cadre (10), pour la capture de matières étrangères incluses dans l'huile traversant l'organe de maille (20), dans lequel
le cadre (10) est un produit moulé d'un seul tenant constitué d'un aimant de ferrite moulé par injection, et comporté :
une ouverture d'arrivée (12) pour l'écoulement de l'huile dans une portion de capture (25) à l'intérieur de l'organe de maille (20) ; et
une portion de bride (11) prévue autour de l'ouverture d'arrivée (12),
dans lequel la portion de bride (11) du cadre (10) est reliée magnétiquement à un organe magnétique (35) définissant un passage d'huile (37) pour la circulation de l'huile, dans lequel
la portion de bride (11) est reliée magnétiquement autour de l'orifice (36) du passage d'huile (37), de sorte qu'une étanchéité est réalisée entre l'orifice (36) du passage d'huile (37) et l'ouverture d'arrivée (12), **caractérisé en ce que**
dans un état où un encrassement s'est produit dans le filtre à huile (1) et où une pression à l'intérieur de la portion de capture (25) dépasse un point prédéterminé, la portion de bride (11) est configurée pour former un espace entre l'orifice (36) de l'organe magnétique (35) et l'ouverture d'arrivée (12) en se désenclenchant de l'organe magnétique (35) par la pression, et **en ce que**
le filtre à huile (1) est monté dans le passage d'huile (37) uniquement par la liaison mécanique.

2. Filtre à huile (1) selon la revendication 1, dans lequel le cadre (10) comprend :
la portion de bride (11) ;
une portion inférieure (13) agencée à l'opposé et à distance de la portion de bride (11) ; et
une portion de raccordement (15) raccordant la portion de bride (11) et la portion inférieure (13), et
dans lequel la portion de raccordement (15) est constituée d'un organe de support unique s'étendant de la portion de bride (11) à la portion inférieure (13).

3. Filtre à huile (1) selon la revendication 1 ou la revendication 2, dans lequel
le passage d'huile (37) est un passage d'huile (37) formé à l'intérieur d'un corps de régulation de pression d'huile (30) inclus dans une transmission, dans lequel
l'organe magnétique (35) est une plaque séparée (35) placée entre des surfaces de joint du corps de régulation de pression d'huile (30).
